# EUROPÄISCHE PATENTANMELDUNG

(11) **EP 0 571 328 A1**
(43) Veröffentlichungstag der Anmeldung: **24.11.1993**
(21) Anmeldenummer: 93810335.5
(22) Anmeldetag: 07.05.1993
(51) Int. Cl.: B32B 27/36, B32B 27/32, B65D 65/40

(54) **Kunststoffolienverbunde und Verpackungen**

(30) Priorität: 22.05.1992 CH 1661/92
(71) Anmelder: ALUSUISSE-LONZA SERVICES AG, CH-8034 Zürich (CH)
(72) Erfinder: Kunz, Peter, CH-8280 Kreuzlingen (CH); Roncoroni, Joachim, W-7760 Radolfzell (DE); Rothschink, Andreas, W-7750 Konstanz (DE)

(57) **Zusammenfassung**

Die Erfindung betrifft Kunststoffolienverbunde und Verpackungen daraus, enthaltend eine Permeabilitätssperrschicht, wobei die Verpackungen aus einem Verbund gefertigt sind, enthaltend von aussen nach innen beispielsweise die Schichten
aₒ) eine Polyesterfolie einer Dicke von 6 bis 23 µm,
b) eine keramische Schicht einer Dicke von 10 bis 500 nm, beispielsweise der allgemeinen Formel SiOₓ,
a) eine Polyesterfolie einer Dicke von 6 bis 23 µm, gegebenenfalls eine weitere keramische Schicht b) und
c) eine Polyolefinfolie einer Dicke von 15 bis 200 µm.

Die Erfindung betrifft auch die Verwendung der Verpackungen z.B. als Beutel-, Flossen- oder Standbeutelverpackungen für Nahrungsmittel, Nahrungsmittelzubereitungen, Genussmittel und Genussmittelzubereitungen.

## Beschreibung

Vorliegende Erfindung betrifft Kunststoffolienverbunde, enthaltend eine Permeabilitätssperrschicht und die Verwendung der Kunststoffolien für die Herstellung von Verpackungen.

Als Verpackungen werden insbesondere Beutel, wie Siegelnahtbeutel, Schlauchbeutel, Standbeutel, Sachets, Säcke, Taschen und Einwickler, beispielsweise für Nahrungsmittel und Nahrungsmittelzubereitungen verstanden.

Beispielsweise Produkte der Nahrungs- und Genussmittelindustrie, die leicht verderblich sind oder sonst Qualitätseinbussen während der Lagerzeit zeigen, müssen gegen Ausseneinflüsse, wie Fremdaromen, Fremdgerüche, Feuchtigkeit, Sauerstoffeindringung, mikrobielle Einflüsse und gegen Verluste von Stoffen des Füllgutes nach aussen durch geeignete Packstoffe geschützt werden. Dieser Schutz kann durch Einbau von Barriereschichten oder Permeabilitätssperrschichten in den Packstoff, wie z.B. Aluminiumfolie, EVOH oder PVDC erzielt werden. Nachteil von Aluminiumfolie ist der hohe Energiebedarf bei der Primär-Herstellung und die Beeinflussung der Sortenreinheit beim Rezykliern von Packstoffen. EVOH ist feuchtigkeitsempfindlich und zeigt verarbeitungstechnische Schwierigkeiten, PVDC ist, wie alle chlorhaltigen Kunststoffe, vom Umweltgedanken her, nicht wünschenswert.

Bei flexiblen Packstoffen, z.B. für Beutel, werden heute vielfach Verbundlaminate eingesetzt, die aus verschiedenartigen, untereinander fest verbundenen Filmen, Folien und/oder anderen Schichten, wie z.B. Kleber oder Barriereschichten, bestehen. Dabei sollen die Eigenschaften der einzelnen Komponenten vorteilhaft miteinander kombiniert werden. Ein wichtiger Aspekt bei der Anwendung von solchen Verpackungen ist die Beständigkeit gegenüber Konservierungsverfahren, die in der Regel Wärmebehandlungsverfahren, wie Pasteurisierverfahren, Sterilisierverfahren oder Aseptikbehandlungen darstellen.

Beispielsweise aus der EP-A 0 240 571 sind Beutel aus Polyester (25 µ)/ Siliciumoxid (600 Å)/cast Polypropylen (70 µ) bekannt, die zur Aufnahme von gekochten und verarbeiteten Nahrungsmitteln vorgesehen sind. Bei langer Lagerung des Wareninhaltes können die mit solchen Verbunden hergestellten Beutel noch nicht überzeugende Werte bezüglich der Haltbarkeit der Füllgüter erbringen.

Aufgabe vorliegender Erfindung ist es, Kunststoffolienverbunde und Verpackungen aus diesen Verbunden zur Verfügung zu stellen, welche die damit verpackten Güter gegen Ausseneinflüsse und gegen Verlust von Stoffen des Füllgutes nach aussen schützen, deren Abfälle im wesentlichen nur Kunststoffe enthalten und die Verpackungen gegen Wärmeeinflüsse, Strahlungseinflüsse und chemische Einflüsse zur Konservierung der Güter, wie z.B. gegen Sterilisier-, Pasteurisier-Verfahren, Garbedingungen und aseptische Behandlung beständig sind.

Erfindungsgemäss wird die Aufgabe dadurch gelöst, dass die Kunststoffolienverbunde von aussen nach innen die Schichten
aₒ) eine Polyesterfolie einer Dicke von 6 bis 23 µm,
a) eine Polyesterfolie einer Dicke von 6 bis 23 µm und
c) eine Polyolefinfolie einer Dicke von 15 bis 200 µm
oder
a) eine Polyolefinfolie einer Dicke von 15 bis 50 µm und
c) eine Polyolefinfolie einer Dicke von 15 bis 200 µm
enthalten, wobei zwischen den Schichten aₒ) und a) und/oder a) und c), resp. a) und c), wenigstens eine keramische Schicht b) in einer Dicke von 10 bis 500 nm angeordnet ist.

Zweckmässig sind Kunststoffolienverbunde nach vorliegender Erfindung, die von aussen nach innen die Schichten
aₒ) eine Polyesterfolie einer Dicke von 6 bis 23 µm,
a) eine Polyesterfolie einer Dicke von 6 bis 23 µm,
c) eine Polyolefinfolie einer Dicke von 20 bis 200 µm
enthalten, wobei zwischen den Schichten aₒ) und a) wenigstens eine keramische Schicht in einer Dicke von 10 bis 500 nm angeordnet ist und zweckmässig zwischen den Schichten a) und c) wenigstens eine keramische Schicht b) in einer Dicke von 10 bis 500 nm angeordnet sein kann.

Zweckmässig sind Kunststoffolienverbunde, die von aussen nach innen die Schichten
aₒ) eine Polyesterfolie einer Dicke von 6 bis 23 µm,
a) eine Polyesterfolie einer Dicke von 6 bis 23 µm,
c) eine Polyolefinfolie einer Dicke von 20 bis 200 µm
enthalten, wobei zwischen den Schichten aₒ) und a) wenigstens eine und insbesondere eine keramische Schicht b) in einer Dicke von 10 bis 500 nm angeordnet ist.

Zweckmässig sind Kunststoffolienverbunde nach vorliegender Erfindung, die von aussen nach innen die Schichten
a) eine Polyolefinfolie und insbesondere eine cast Polypropylenfolie (cPP) oder orientierte Polypropylenfolie (OPP) einer Dicke von 15 bis 50 µm und
c) eine Polypropylenfolie einer Dicke von 20 bis 200 µm
enthalten, wobei zwischen den Schichten a) und c) wenigstens eine keramische Schicht b) in einer Dicke von 10 bis 500 nm angeordnet ist.

Zweckmässig sind Kunststoffolienverbunde nach vorliegender Erfindung, die von aussen nach innen die Schichten
a) eine Polyolefinfolie und insbesondere eine cast Polypropylenfolie (cPP) oder orientierte Polypropylenfolie (OPP) einer Dicke von 15 bis 50 µm und
c) eine Polyethylenfolie einer Dicke von 20 bis 200 µm
enthalten, wobei zwischen den Schichten a) und c) wenigstens eine keramische Schicht b) in einer Dicke von 10 bis 500 nm angeordnet ist.

Zweckmässig sind Kunststoffolienverbunde nach vorliegender Erfindung die von aussen nach innen die Schichten
a) eine biaxial orientierte Polypropylenfolie einer Dicke von 15 bis 50 µm und
c) eine Polypropylenfolie einer Dicke von 20 bis 200 µm
enthalten, wobei zwischen den Schichten a) und c) wenigstens eine keramische Schicht b) in einer Dicke von 10 bis 500 nm angeordnet ist.

Zweckmässig sind Kunststoffolienverbunde nach vorliegender Erfindung die von aussen nach innen die Schichten
a) eine biaxial orientierte Polypropylenfolie einer Dicke von 15 bis 50 µm und
c) eine biaxial orientierte Polypropylenfolie einer Dicke von 15 bis 50 µm
enthalten, wobei zwischen den Schichten a) und c) wenigstens eine keramische Schicht b) in einer Dicke von 10 bis 500 nm angeordnet ist.

Mit "aussen" wird die Seite der Verbunde bezeichnet, die bei einer Verpackung nach aussen zu liegen kommt und mit "innen" wird die Seite des Verbundes bezeichnet, die gegen den Innenraum einer Verpackung zeigt.

Die keramische Schicht b) kann auf den Schichten a), aₒ) oder c), die dabei als Trägermaterial oder Substrat dienen, abgeschieden werden. Je nach einseitiger Abscheidung der keramischen Schicht auf den Schichten aₒ) oder c) und ein- oder beidseitiger Abscheidung der keramischen Schicht auf der Schicht a), gelangen eine, zwei, drei oder vier keramische Schichten zur Anwendung. Bevorzugt ist eine Schicht b) in einem Kunststoffolienverbund.

Die verwendeten Kunststoffolienverbunde weisen demnach Kunststoffolien auf, die thermoplastische Kunststoffe der Reihen der Polyolefine und der Polyester enthalten oder daraus bestehen. Die Kunststoffolien aus diesen Thermoplasten können die üblichen Hilfsmittel, wie z.B. Weichmacher, Antioxidantien, Lichtschutzmittel, Füllstoffe, Verstärkungsmittel, Gleitmittel, z.B. Erocasäureamid, Emulgatoren, Pigmente, z.B. TiO₂, optische Aufheller oder Antistatika enthalten. Die lebensmittelrechtlichen Bestimmungen sind bei der Auswahl aller Stoffe einzuhalten.

Die Kunststoffolien können fallweise ungereckt oder uniaxial oder biaxial gereckt sein.

Beispiele von Polyolefinen sind Polyethylene, z.B. Polyethylen hoher Dichte (HDPE, Dichte grösser als 0,944g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), bzw. Gemische derselben, Polypropylene, amorphes oder kristallines Polypropylen, ataktisches oder isotaktisches Polypropylen oder Gemische dieser Polypropylene, axial oder biaxial orientiertes Polypropylen oder gegossenes (cast) Polypropylen, Poly-1-buten, Poly-3-methylbuten, Poly-4-methylpenten und Copolymere davon, wie z.B. von Polyethylen mit Vinylacetat, Vinylalkohol, Acrylsäure, z.B. Ionomerharze, wie Copolymerisate von Ethylen mit etwa 11 % Acrylsäure, Methacrylsäure, Acrylestern, Tetrafluorethylen oder Polypropylen, sowie statistische Copolymere, Block-Copolymere oder Olefinpolymer-Elastomer-Mischungen.

Thermoplaste aus der Reihe der Ester sind beispielsweise Polyalkylenterephthalate oder Polyalkylenisophthalate mit Alkylengruppen oder -rest en mit 2 bis 10 Kohlenstoffatomen oder Alkylengruppen mit 2 bis 10 C-Atomen, die wenigstens durch ein -O- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalendicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Andere Thermoplaste auf Ester-Basis sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Solche glykolmodifizierte Polyester sind der Fachwelt als PETG bekannt.

Zweckmässige Thermoplaste auf Ester-Basis sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -O- unterbrochen sind.

Bevorzugte Thermoplaste auf Ester-Basis sind Polylalkylenterephthalate mit Alkylengruppen oder -resten mit 2 bis 4 Kohlenstoffatomen und ganz besonders bevorzugt sind Polyethylenterephthalate. Zu diesen Polyethylenterephthalaten sind auch A-PET, PETP und das genannte PETG oder G-PET zu zählen. Das PETP ist ganz besonders bevorzugt.

Mit den obengenannten Stoffgruppen können z.B. auch Polymergemische oder Misch-, Block-, Pfropf- oder Copolymere umfasst sein.

Die Kunststoffolien, d.h. insbesondere die Polyesterfolien und Polyolefinfolien, an sich können als Monofilm, jedoch auch als Verbund zweier oder mehrerer Filme vorliegen, wobei die Stoffgruppe der Filme im wesentlichen immer dieselbe sein kann.

Die Kunststoffolien können ein- oder beidseitig flamm-, korona- oder plasmabehandelt und/oder lackiert und/oder coextrudiert sein.

Die Kunststoffolien können durchsichtig, durchscheinend, trüb, opak, gefärbt oder farbpigmenthaltig sein.

Die Dicke jeder der beiden Schichten a) und aₒ), demnach der aussenliegenden Polyesterfolien, ist jeweils zweckmässig 8 bis 20 µm und bevorzugt 10 bis 15 µm, oder der einzelnen Schicht a) in Form der aussenliegenden Polyolefinfolie ist zweckmässig 15 bis 40 µm und bevorzugt 15 bis 35 µm sein.

Die Dicke der Schicht c), demnach der innenliegenden Polyolefinfolie, ist zweckmässig 15 bis 200 µm, besonders zweckmässig von 20 bis 200 µm, bevorzugt von 50 bis 150 µm und bevorzugt 80 bis 150 µm.

Als Permeabilitätssperrschicht, Permeabilitätssperre, Sperr- oder Barriereschicht nach vorliegender Erfindung werden durch Vakuumdünnschichtverdampfung erzeugte keramische Schichten von Oxiden und/oder Nitriden von Metallen und/oder Halbmetallen angewendet.

Die keramische Schicht wird zweckmässig durch ein Vakuumdünnschichtverfahren aufgebracht, wobei physikalische Beschichtungsverfahren (PVD) bzw. chemische Beschichtungsverfahren (CVD) mit Plasmaunterstützung zum Einsatz kommen können. Bevorzugt werden physikalische Beschichtungsverfahren, insbesondere auf der Basis von Elektronenstrahlverdampfen oder Widerstandsheizen oder induktivem Heizen aus Tiegeln. Besonders bevorzugt ist das Elektronenstrahlverdampfen. Die beschriebenen Verfahren können reaktiv und/oder mit Ionenunterstützung gefahren werden.

Als keramische Schicht können die Oxide und/oder Nitride von Metallen und/oder Halbmetallen, z.B. diejenigen des Siliciums, des Aluminiums, des Eisens, Nickels, Chroms, Tantals, Molybdäns, Magnesiums, Bleis oder Mischungen daraus angewendet werden. Damit umfasst sind auch die Oxinitride der genannten Metalle oder Halbmetalle.

Die keramische Schicht kann auch neben den genannten Oxiden die entsprechenden Metalle zumindest in kleineren Mengen enthalten.

Als keramische Schichten sind die Siliciumoxide oder Aluminiumoxide zweckmässig. Die Siliciumoxide können die Formel allgemeine Formel SiOₓ, wobei x zweckmässig eine Zahl von 1 bis 2 darstellt, bevorzugt von 1,1 bis 1,9 und insbesondere von 1,1 bis 1,7 darstellt, aufweisen. Die Aluminiumoxide können die Formel Al_{y}O_{z}, wobei y/z z.B. eine Zahl von 0,2 bis 1,5 und bevorzugt von 0,65 bis 0,85 darstellt, aufweisen.

Beispielsweise hat die keramische Schicht eine Dicke von 5 bis 500 nm, zweckmässig von 10 bis 200 nm und bevorzugt von 40 bis 150 nm.

Zweckmässig beträgt die Menge an Oxiden und/oder Nitriden von Metallen und/oder Halbmetallen der keramischen Schicht 50 bis 400 mg/m² Kunststoffolie, bevorzugt 100 bis 150 mg/m² Kunststoffolie und insbesondere 110 bis 130 mg/m² Kunststoffolie.

Besonders bevorzugt sind Permeabilitätssperrschichten in Form einer 10 bis 500 nm dicken keramischen Schicht eines Siliciumoxides der allgemeinen Formel SiOₓ, wobei x eine Zahl von 1,1 bis 1,7 darstellt oder eines Aluminiumoxides der allgemeinen Formel Al_{y}O_{z}, wobei y/z eine Zahl von 0,2 bis 1,5 darstellt.

Die Permeabilitätssperrschicht in Form einer keramischen Schicht wird in der Praxis auf wenigstens einer Seite wenigstens einer Kunststoffolie durch eines der genannten Verfahren aufgebracht. Die Kunststoffolie dient demnach als Substrat oder Träger auf dem die keramische Schicht abgeschieden wird.

Entsprechend den Anforderungen an die Sperr- oder Barrierewirkung der Permeabilitätssperre, kann die Dicke und Anzahl von keramischen Schichten gewählt werden.

Es kann z.B. eine Kunststoffolie einseitig mit einer keramischen Schicht beschichtet werden und auf die keramische Schicht kann die weitere Kunststoffolie aufgebracht werden.

Eine weitere Möglichkeit besteht darin, zwei Kunststoffolien, die je einseitig mit den keramischen Schichten beschichtet sind, mit den Schichten gegeneinander, zu verbinden.

Eine andere Ausführungsform kann darin liegen, eine Kunststoffolie beidseitig zu beschichten und auf den keramischen Schichten unbeschichtete Kunststoffolien oder je eine einseitig keramisch beschichtete Kunststoffolie anzubringen. In letzterem Fall ist eine Anordnung von keramische Schicht gegen keramische Schicht zweckmässig.

In der Praxis sind zweckmässige Kunststoffolienverbunde nach vorliegender Erfindung solche, deren Kunststoffolien Polyester und insbesondere PETP oder Polyolefine und insbesondere Polypropylen enthalten oder daraus bestehen und eine Permeabilitätssperrschicht auf die Polyesterfolie oder die Polypropylenfolie resp. auf beide Polyesterfolien aufgebracht ist und insbesondere die Polyester- und Polyolefinschichten mit der oder den dazwischen befindlichen keramischen Schichten gegeneinander kaschiert werden.

Weitere in der Praxis zweckmässige Kunststoffolienverbunde nach vorliegender Erfindung sind solche, deren Kunststoffolien aₒ) und a) Polyethylenterephthalate und insbesondere PETP enthalten oder daraus bestehen und eine Permeabilitätssperrschicht auf eine der Polyethylenterephthalatfolien oder beiden Polyethylenterephtalatfolien aufgebracht ist. Die Permeabilitätssperrschicht kann z.B. auf der Schicht a) befindlich sein, die ihrerseits gegen die Schicht aₒ) kaschiert ist.

Die Permeabilitätssperrschicht kann sich auch auf der Polyolefinfolie c) auf Seite der Kaschierung gegen die Polyesterfolie a) bzw. Polyolefinfolie a) und/oder auf der Polyesterfolie a) oder Polyolefinfolie a) auf der Seite der Kaschierung gegen die Polyolefinfolie c) befinden.

Zweckmässig sind die Kunststoffolien unter sich, die mit der Permeabilitätssperrschicht beschichtete Seite einer Kunststoffolie mit der weiteren Kunststoffolie oder die auf je einer Kunststoffolie befindlichen Permeabilitätssperrschichten gegenseitig, mit einem Haftvermittler oder Kleber verbunden.

Als Haftvermittler zwischen den Kunststoffolien, zwischen den Kunststoffolien und den keramischen Schichten oder zwischen den keramischen Schichten können beispielsweise Vinylchlorid-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Co- polymerisate, Phenolharze, Kautschukderivate, Acrylharze, Acrylharze mit Phenol bzw. Epoxidharzen, siliciumorganische Verbindungen, wie Organosilane, modifizierte Polyolefine, wie säuremodifizierte Polyolefine oder Ethylenacrylsäure (EAA).

Bevorzugt werden EAA (Ethylenacrylsäure) oder modifizierte Polyolefine, wie z.B. modifizierte Polypropylene.

Ein bevorzugtes modifiziertes Polypropylen ist ein Addukt aus Maleinsäureanhydrid und einem Ethylen-Propylen-Copolymer. Ganz besonders bevorzugt werden Dispersionen von modifizierten Polyolefinen. Ein Beispiel einer Dispersion eines modifizierten Polypropylens ist Morprime (Mar-kenname der Firma Morton International of Norton Norwich Products, Inc.).

Weitere geeignete Haftvermittler sind Klebstoffe wie Nitrilkautschuk-Phenolharze, Epoxide, Acrylnitril-Butadien-Kautschuk, urethanmodifizierte Acryle, Polyester-co-Polyamide, Heissschmelzpolyester, mit Heissschmelzpolyester vernetzte Polyisocyanate, polyisobutylenmodifizierte Styrol-Butadien-Kautschuke, Urethane, Ethylen-Acrylsäure-Mischpolymere und Ethylenvinylacetat-Mischpolymere.

Werden als Kleber Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber (1 oder 2 Komponenten PU-Kleber) oder Epoxidharz-Kleber.

Bevorzugt werden die Schichten in Form von Folien des Kunststoffolienverbundes nach vorliegender Erfindung mittels eines Klebers gegeneinander kaschiert.

Bevorzugt werden Kaschierkleber auf Polyurethan-Basis und ganz besonders bevorzugt Zweikomponenten-Polyurethan-Kleber.

Der Haftvermittler kann beispielsweise in Mengen von 0,1 bis 10 g/m², zweckmässig in Mengen von 0,8 bis 6 g/m² und bevorzugt in Mengen von 2 bis 6 g/m² angewendet werden.

Der Kaschierkleber kann beispielsweise in Mengen von 1 bis 10 g/m² vorzugsweise in Mengen von 2 bis 8 g/m² und insbesondere in Mengen von 3 bis 6 g/m² angewendet werden.

Zur Unterstützung und Verbesserung der Verbundhaftung von Haftvermittler und Kaschierkleber, zwischen den Schichten, resp. Kunststoffolien ist es oft zweckmässig, der Haftvermittlerschicht auf der kleberzugewandten Seite eine ausreichende Oberflächenspannung zu vermitteln. Die Erhöhung der Oberflächenspannung kann vorzugsweise durch eine Flammvorbehandlung eine Plasmabehandlung oder eine Koronabehandlung erfolgen.

Die Laminierung der einzelnen Schichten, resp. Kunststoffolien kann beispielsweise durch Heisskalandrieren, Kaschierung, Extrusionsbeschichtung, Coextrusionsbeschichtung oder durch Extrusionskaschierung erfolgen, wobei die Kaschierung bevorzugt ist.

Bevorzugt nach vorliegender Erfindung sind Kunststoffolienverbunde und Verpackungen daraus, die von aussen nach innen folgende Schichten aufweisen:
aₒ) eine PET-P-Folie einer Dicke von 10 bis 15 µm und insbesondere 12 µm,
b) eine auf Folie a) abgeschiedene SiOₓ-Schicht, wobei x die Bedeutung von 1,1 bis 1,7 hat und durch ein Vakuumdünnschichtverfahren auf Schicht a) als Trägerfolie abgeschieden ist,
a) eine PET-P-Folie einer Dicke von 10 bis 15 µm und insbesondere 12 µm,
c) eine Polypropylenfolie in einer Dicke von 50 bis 100 µm und insbesondere 75 µm, oder eine Folie aus Polyethylenen mittlerer und/oder niedriger Dichte in einer Dicke von 80 bis 120 µm,
wobei zwischen den Schichten aₒ) und a), sowie b) und c) ein Kaschierkleber angeordnet ist;
oder
a) eine Folie aus biaxial gerecktem Polypropylen in einer Dicke von 15 bis 35 µm,
b) eine auf Folie a) abgeschiedene SiOₓ-Schicht, wobei x die Bedeutung von 1,1 bis 1,7 hat und durch ein Vakuumdünnschichtverfahren auf Schicht a) als Trägerfolie abgeschieden ist
c) eine Polypropylenfolie in einer Dicke von 50 bis 100 µm, vorzugsweise 75 µm

wobei zwischen den Schichten b) und c) ein Kaschierkleber angeordnet ist und -- als andere Variante -- die Schicht b) auf c) abgeschieden, und der Kaschierkleber zwischen Schicht a) und b) angeordnet werden kann.

Die erfindungsgemässen Kunststoffolienverbunde eignen sich insbesondere zur Verwendung als Material zur Herstellung von Verpackungen und die Verpackungen weisen eine hohe Sperrwirkung gegenüber chemischen, physikalischen oder mikrobiellen Einflüssen auf und schützen das verpackte Gut vor z.B. Oxidation, Strahlung oder Verderb. Insbesondere sind die Sperreigenschaften gegenüber Luft, Sauerstoff und Wasserdampf, Feuchtigkeit, Aroma und Fremdgerüchen hervorragend.

Die Kunststoffolienverbunde nach vorliegender Erfindung weisen zweckmässig eine Sauerstoffbarrierewirkung, gemessen nach ASTM D 3985-81, bei 25° C und 50 % relativer Luftfeuchtigkeit, in unbelastetem Zustand von kleiner als 1,8, zweckmässig kleiner als 0,6, besonders zweckmässig unter 0,5, vorzugsweise von unter 0,3 cm³/(m²·d·bar), und nach einem Pasteurisierverfahren bzw. Sterilisierverfahren von unter 2,0 cm³/(m²·d·bar), vorzugsweise von unter 0,8 cm³/(m²·d·bar) auf.

Verpackungen aus den erfindungsgemässen Kunststoffverbunden, insbesondere Beutel- und Standbeutelverpackungen nach vorliegender Erfindung, weisen zweckmässig eine Sauerstoffbarrierewirkung, gemessen nach ASTM D 3985-81, bei 25° C und 50 % relativer Luftfeuchtigkeit, in unbelastetem Zustand von unter 0,75, vorzugsweise von unter 0,5 cm³/(pack·d), und nach einem Pasteurisierverfahren bzw. Sterilisierverfahren von unter 2,0, vorzugsweise von unter 0,75 cm³/(pack·d) auf.

Die Kunststoffolienverbunde nach vorliegender Erfindung weisen zweckmässig eine Wasserdampfbarrierewirkung, gemessen nach ASTM F 372-78, bei 25° C und 90 % relativer Luftfeuchtigkeit, in unbelastetem Zustand von unter 0,6, vorzugsweise von unter 0,4, bevorzugt kleiner als 0,1 g/(m²·d), und nach einem Pasteurisierverfahren bzw. Sterilisierverfahren von unter 1,0 g/(m²·d), vorzugsweise von unter 0,9 g/(m²·d) auf.

Verpackungen, insbesondere Beutel- und Standbeutelverpackungen, nach vorliegender Erfindung, weisen zweckmässig eine Wasserdampfbarrierewirkung, gemessen nach ASTM F 372-78, bei 25° C und 90 % relativer Luftfeuchtigkeit, in unbelastetem Zustand, sowie nach einem Pasteurisierverfahren, bzw. Sterilisierverfahren von unter 0,1 g/(pack·d), vorzugsweise von unter 0,05 g/(pack·d) auf.

Der erfindungsgemässe Kunststoffolienverbund kann zur Erweiterung dessen Eigenschaften, insbesondere als Verpackungsmaterial mit einer bzw. mehreren Kunststoffschichten, wie z.B. Kunststoffolien, mittels Lackkaschierung, z.B. mit lösemittelhaltigen oder lösemittelfreien Klebern, bzw. wasserbasierenden Klebstoffsystemen, durch Extrusionskaschierungen oder durch Extrusionsbeschichtung überzogen werden. Es können auch eine oder mehrere Schichten z.B. eines Siegellacks durch eine Lackanwendung oder einer Siegelfarbe auf den Kunststoffolienverbunden ein- oder beidseitig aufgebracht werden.

Damit kann z.B. eine oder beide Aussenseiten eines Kunststoffverbundes nach vorliegender Erfindung partiell oder vollständig heiss- oder kalt siegelfähig ausgerüstet werden, um schliesslich daraus Verpackungsmaterial oder Packstoffe für dicht verschliessbare, flexible oder halbstarre Verpackungen herzustellen. Dieser Packstoff kann auf verschiedene Arten bedruckt (Tief-, Flexo- oder Offsetdruck) werden und zwar entweder auf der Aussenseite der ersten Folie oder im Umkehrdruck auf der Innenseite. Weiterhin kann zum Schutz eines Druckbildes auf der Aussenseite ein Schutzlack, wie z.B. hitzeresistenter oder ein Releaselack aufgetragen werden.

Es kann auch auf der Aussenseite eines Verbundes eine Schicht aus Papier, Pappe oder anderen cellulosischen Materialien aufgebracht werden. Diese Materialien können auch gefärbt oder bedruckt sein.

Das Verpackungsmaterial oder der Packstoff, aus den erfindungsgemässen Kunststoffolienverbunden, können z.B. auf marktüblichen Verpackungsmaschinen zu flexiblen oder halbstarren Verpackungen, wie beispielsweise Siegelnahtbeuteln, Schlauchbeuteln, Standbeuteln, Sachets, Einwicklern, Säcken, Taschen usw. verarbeitet werden. Durch Siegeln mittels Kaltsiegel-, Heissiegel-, Induktions- bzw. Ultraschallsiegeltechnik, bzw. durch Schweissen oder Kleben können Nähte gelegt und Verpackungen erzeugt werden und die Verpackungen dicht verschlossen werden.

Um z.B. Beutelverpackungen resp. Standbeutelverpackungen herzustellen, werden die erfindungsgemässen Kunststoffolienverbunde beispielsweise durch Siegeln, Schweissen, Ultraschallsiegeln oder -schweissen oder Kleben in Form von Nähten an den Mantelteilen und gegebenenfalls einem Bodenteil zur Beutelverpackung gefügt. Bevorzugt wird das Siegeln und insbesondere das Wärmekontaktsiegeln. Die Festigkeit der Siegelnähte wird durch die Siegelgeometrie, die Siegeltemperatur, den Siegeldruck und die Siegelzeit beeinflusst. Werden die Nähte mit Ultraschallanwendung ausgeführt, müssen entsprechend die dazu notwendigen Energieparameter eingehalten werden.

Die Beutel- und Standbeutelverpackungen nach vorliegender Erfindung weisen z.B. trennfest gesiegelte Boden-, Kopf- und Seitennähte auf.

Die erfindungsgemässen Verpackungen können zwei verschieden starke Verbindungen, insbesondere Siegelnähte, aufweisen. Im Bereich der Bodenteile und der Seitennähte wird z.B. eine trennfeste Verbindung und insbesondere eine trennfeste Siegelung angewendet, die Kopfbeutelnaht und gegebenenfalls eine Naht der selbsttätigen Überdruckentlastung ist vorteilhaft leicht aufreissbar ausgebildet.

Typische Reisskräfte der trennfesten Verbindung sind grösser als 30 N/15 mm resp. die Zerstörung des Beutels neben den trennfesten Verbindungsnähten. Typische Reisskräfte der leicht aufreissbaren Kopfnaht sind 5 bis 20 N/15 mm.

Die Reisskräfte von den Nähten kann bei Siegelnähten über die Geometrie des Siegelwerkzeuges, den Siegeldruck, die Siegeltemperatur und/oder die Siegelzeit oder entsprechend über die Energiemenge beim Ultraschallschweissen oder -siegeln beeinflusst werden.

Zweckmässig werden die Siegelnähte mit einem Werkzeug mit abgerundeten Kanten ausgeführt. Die mit einem solchen Werkzeug hergestellten Siegelnähte weisen höhere Festigkeiten auf, als solche, die mit einem scharfkantigen Werkzeug hergestellt worden sind. Bei letzterem kann eine Kerbwirkung eintreten. Dieser Umstand kann jedoch zur Gestaltung der Siegelnähte am Aufreissstreifen angewendet werden.

Der Siegeldruck richtet sich nach dem Material und der Dicke der Kunststoff-Folie und beträgt typischerweise 1 bis 10 kg/cm² Siegelfläche.

Die Siegeltemperatur ist ebenfalls material- und dickenabhängig und kann von 120 °C bis 250 °C betragen.

Bevorzugt wird die Siegelung über die Temperatur und/oder Zeit gesteuert.

Für trennfeste Verbindungen werden bevorzugt Temperaturen von 200 °C bis 250 °C angewendet. Für schwer aufreissbare Verbindungen werden z.B. Temperaturen von 180 °C bis 200 °C angewendet. Für leicht aufreissbare Verbindungen werden Temperaturen zB. von 170 °C bis 190 °C angewendet.

Die Siegelzeit kann in der Praxis 0,1 bis 3 Sec. betragen; bevorzugt ist eine Siegelzeit von 0,6 bis 1 Sec. für trennfeste Verbindungen, von 0,4 bis 0,8 Sec. für schwer aufreissbare Verbindungen und von 0,5 bis 0,6 Sec. für leicht aufreissbare Verbindungen.

Die Siegelnähte können z.B. derart gesetzt, dass sich ein Standbeutel ergibt. Zu diesem Zwecke werden z.B. aus einer Vorder- und einer Rückseite, die durch Falten des Kunststoffolienverbundes oder durch Fügen zweier Kunststoffolienverbunde erhalten werden, die Seitennähte und gegebenenfalls die Bodennähte gesiegelt. Im Bereich des Beutelfussteiles können, von den Seitennähten ausgehend, von oben aussen schräg nach unten innen auf die Bodennähte laufend, Siegelnähte gesetzt werden. Dadurch erhöht sich die Eigenstabilität und Standfestigkeit eines Beutels.

Die Kopfnaht und eine allfällig vorgesehene selbsttätige Überdruckentlastung können wenigstens teilweise leicht aufreissbar gesiegelt werden und bilden danach wenigstens eine leicht aufreissbare Beutelkopfnaht resp. selbsttätige Überdruckentlastung aus.

Die Kopfnaht kann eine Aufreisshilfe in Form einer Aufreissspitze in der Siegelnaht enthalten. Die Überdruckentlastung kann eine umsiegelte Ausnehmung in der Verpackung oder eine nach innen gerichtete Aufreissspitze darstellen.

Beispielsweise bei der Verpackung von feuchtigkeitshaltigen Füllgütern, wie z.B. aus dem Nahrungsmittelbereich, kann die Beutelverpackung befüllt, verschlossen und, gegebenenfalls unter Gegendruck, pasteurisiert oder sterilisiert werden. Vor dem Verbrauch oder Verzehr der Füllgüter kann die Beutelverpackung vorzugsweise im Wasserbad oder durch Mikrowellenbehandlung in der Beutelverpackung wiedererwärmt werden. Bei erreichen eines bestimmten Innendruckes, z.B. durch eine Dampfentwicklung kann über das Auftrennen der selbsttätigen Überdruckentlastung im Bereiche des Beutelkopfes eine Druckentlastung stattfinden. Die selbsttätige Überdruckentlastung kann auch durch eine Aufreisshilfe, beispielsweise durch eine in Form einer nach der Beutelinnenseite gerichteten Aufreissspitze ausgebildeten Siegelnaht zwischen den Mantelteilen erfolgen.

Nach der geforderten Erwärmung des Beutelinhaltes kann die Beutelkopfnaht entlang der Kopfnaht resp. einer leicht aufreissbaren Siegelnaht aufgetrennt werden. Damit wird der Beutel soweit geöffnet, dass der Inhalt leicht entnommen werden kann. Das leichte Auftrennen der Beutelkopfnaht kann durch eine Aufreisshilfe an der Beutelkopfnaht zusätzlich erleichtert werden.

Die vorliegende Erfindung betrifft auch die Verwendung von erfindungsgemässer Verpackungen zur Aufnahme von verschiedenen Füllgütern.

Die Verpackungen eignen sich z.B. zur Aufnahme von Füllgütern der Nahrungsmittelindustrie, insbesondere zur Aufnahme von Nahrungs- und Genussmitteln. Die Nahrungsmittel können roh oder in einer zum Verzehr bereiten Form heiss, warm oder kalt eingefüllt werden. Nach dem Befüllen einer Verpackung und vor oder insbesondere nach dem Verschliessen resp. Aufsiegeln eines Deckels kann die Verpackung einem Konservierungsverfahren z.B. pasteurisiert resp. sterilisiert werden, beispielsweise im Bereich der Standard-Bedingungen bei 80 bis 130 °C, insbesondere 85 °C bis 95 °C, resp. 110 bis 125 °C, und während 30 sec. bis 6 Stunden. Die befüllte Verpackung kann bei Raumtemperatur gelagert, gekühlt oder tiefgekühlt werden und vor dem Gebrauch erwärmt oder auf Kochtemperatur erhitzt werden., z.B. im Wasserbad oder in der Mikrowelle.

Vorliegende Erfindung betrifft auch die Verwendung der erfindungsgemässen Kunststoffverbunde zur Herstellung von Verpackungen und insbesondere Beutel-, Flachbeutel-, Schlauchbeutel- oder Standbeutelverpackungen, Sachets und Einwicklern, z.B. zur Verpackung von Füllgütern aus dem Nahrungs- und Genussmittelbereich. Als Füllgüter kommen vornehmlich Nahrungsmittel und Nahrungsmittelzubereitungen wie Fleisch- und Fleischgerichte, Schokolade, Suppen, Saucen, Granulate, Flocken und Genussmittel wie z.B. Mix Getränke, milchhaltige Getränke, Fruchtsäfte und Fruchtsaftzubereitungen in Betracht. Solche Nahrungs- und Genussmittel können in flüssiger, pastöser, fester Form oder einer Mischung dieser Formen vorliegen. Nahrungsmittelzubereitungen können ebenfalls in flüssiger, pastöser, gallertiger, fester oder halbfester Form vorliegen oder Gemische solcher Formen darstellen. Ferner können die Nahrungsmittel und Nahrungsmittelzubereitungen in roher, halbgarer oder garer Form in die erfindungsgemässe Verpackung abgefüllt werden. Die Verpackungen können einem Konservierungsverfahren unterzogen werden. Beispielsweise können die Verpackungen keimfrei oder keimarm gemacht werden. Beispielsweise kann dies durch Pasteurisierung oder Sterilisation erfolgen. Andere Methoden, wie chemische Methoden unter Verwendung von Konservierungsmitteln, oder aseptische Behandlung mit Strahlung oder Peroxiden sind ebenfalls möglich. In der Praxis wird das Füllgut z.B. in die einendig offene Beutelverpackung abgefüllt, die Öffnung beispielsweise durch Siegeln dicht verschlossen und die befüllte und verschlossene Beutelverpackung den Konservierungsverfahrensbedingungen, z.B. Pasteurisierungsbedingungen, z.B. Erwärmen auf 80 bis 115 °C, bevorzugt 85 bis 95 °C während beispielsweise 0,5 bis 6 Stunden und zweckmässig während 1 bis 4 Stunden, unterworfen. Es ist auch möglich, die Füllgüter z.B. Fruchtsäfte, durch Hitzebehandlung keimfrei zu machen und die heissen Füllgüter in die erfindungsgemässen Verpackungen abzufüllen (sog. Heisseinfüllen). Die Sterilisationsbedingungen sind 110 °C - 130 °C, zweckmässig 121 °C, während 20 bis 60 min, insbesondere 30 min. Derart behandelte Verpackungen esp. Beutelverpackungen können dann über längere Zeiträume gelagert werden. Zur Aufbereitung des Inhaltes und insbesondere zur Wiedererwärmung kann die gefüllte und verschlossene Beutelverpackung einer Wasserbad- oder gegebenenfalls einer Mikrowellenbehandlung ausgesetzt werden. Mit zunehmender Wärmeentwicklung und Erwärmung des Beutelinhaltes steigt das Volumen z.B. durch Dampfentwicklung. Falls vorgesehen, kann bei Erreichen eines bestimmten Innendruckes, der z.B. bei 4 bis 10 Pa liegen kann, eine selbsttätige Druckentlastung erfolgen. Nach Abschluss der Wiedererwärmungsprozedur kann die gesamte oder Teile der Beutelkopfnaht leicht, z.B. von Hand, geöffnet werden. Anreisshilfen, wie Grifflaschen können dazu vorgesehen werden. Auch nach den Pasteurisierverfahren, der Lagerung und dem Wiedererwärmen, das beispielsweise bis zu 3 Stunden betragen kann, tritt weder eine Delamination des Verbundes auf, noch lösen sich ungewollt die Siegelnähte der Beutelverpackung.

Verpackungen und insbesondere Beutelverpackungen nach vorliegender Erfindung können einen Inhalt von beispielsweise 0,2 l bis 10 l aufweisen, wobei Inhalte von 0,25 l bis 5 l bevorzugt sind und Inhalte von 0,25 l bis 3 l besonders bevorzugt sind. Die Aussenabmessungen können z.B. von 5 cm Kantenlänge bis 60 cm Kantenlänge, bezogen auf Höhe und Breite, betragen, wobei Kantenlängen von 10 bis 30 cm bevorzugt sind.

## Patentansprüche

1. Kunststoffolienverbunde, enthaltend eine Permeabilitätssperrschicht, dadurch gekennzeichnet, dass die Kunststoffolienverbunde von aussen nach innen die Schichten
aₒ)eine Polyesterfolie einer Dicke von 6 bis 23 µm,
a) eine Polyesterfolie einer Dicke von 6 bis 23 µm und
c) eine Polyolefinfolie einer Dicke von 15 bis 200 µm
oder
a) eine Polyolefinfolie einer Dicke von 15 bis 50 µm und
c) eine Polyolefinfolie einer Dicke von 15 bis 200 µm,
enthalten, wobei zwischen den Schichten aₒ) und a) und/oder a) und c), resp. a) und c), wenigstens eine keramische Schicht b) in einer Dicke von 10 bis 500 nm angeordnet ist.

2. Kunststoffolienverbunde nach Anspruch 1, dadurch gekennzeichnet, dass die Kunststoffolienverbunde von aussen nach innen die Schichten
aₒ) eine Polyesterfolie einer Dicke von 6 bis 23 µm,
a) eine Polyesterfolie einer Dicke von 6 bis 23 µm,
c) eine Polyolefinfolie einer Dicke von 20 bis 200 µm
enthalten, wobei zwischen den Schichten aₒ) und a) wenigstens eine keramische Schicht b) in einer Dicke von 10 bis 500 nm angeordnet ist und/oder zwischen den Schichten a) und c) wenigstens eine keramische Schicht b) in einer Dicke von 10 bis 500 nm angeordnet sein kann.

3. Kunststoffolienverbunde nach Anspruch 1, dadurch gekennzeichnet, dass die Kunststoffolienverbunde von aussen nach innen die Schichten
aₒ) eine Polyesterfolie einer Dicke von 6 bis 23 µm,
a) eine Polyesterfolie einer Dicke von 6 bis 23 µm,
c) eine Polyolefinfolie einer Dicke von 20 bis 200 µm
enthalten, wobei zwischen den Schichten aₒ) und a) wenigstens eine keramische Schicht b) in einer Dicke von 10 bis 500 nm angeordnet ist.

4. Kunststoffolienverbund nach Anspruch 1, dadurch gekennzeichnet, dass die Kunststoffolienverbunde von aussen nach innen die Schichten
a) eine Polyolefinfolie einer Dicke von 15 bis 50 µm,
c) eine Polypropylenfolie einer Dicke von 20 bis 200 µm
enthalten, wobei zwischen den Schichten a) und c) wenigstens eine keramische Schicht b) in einer Dicke von 10 bis 500 nm angeordnet ist.

5. Kunststoffolienverbunde nach Anspruch 1, dadurch gekennzeichnet, dass die Kunststoffolienverbunde von aussen nach innen die Schichten
a) eine Polyolefinfolie einer Dicke von 15 bis 50 µm,
c) eine Polyethylenfolie einer Dicke von 20 bis 200 µm
enthalten, wobei zwischen den Schichten a) und c) wenigstens eine keramische Schicht b) in einer Dicke von 10 bis 500 nm angeordnet ist.

6. Kunststoffolienverbunde nach Anspruch 1, dadurch gekennzeichnet, dass die Kunststoffolienverbunde von aussen nach innen die Schichten
a) eine biaxial orientierte Polypropylenfolie einer Dicke von 15 bis 50 µm,
c) eine Polypropylenfolie einer Dicke von 20 bis 200 µm
enthalten, wobei zwischen den Schichten a) und c) wenigstens eine keramische Schicht b) in einer Dicke von 10 bis 500 nm angeordnet ist.

7. Kunststoffolienverbunde nach Anspruch 1, dadurch gekennzeichnet, dass die Kunststoffolienverbunde von aussen nach innen die Schichten
a) eine biaxial orientierte Polypropylenfolie einer Dicke von 15 bis 50 µm
c) eine biaxial orientierte Polypropylenfolie einer Dicke von 15 bis 50 µm
enthalten, wobei zwischen den Schichten a) und c) wenigstens eine keramische Schicht b) in einer Dicke von 10 bis 500 nm angeordnet ist.

8. Kunststoffolienverbunde nach Anspruch 1, dadurch gekennzeichnet, dass die Schicht a) und aₒ) je eine Polyesterfolie in einer Dicke von 10 bis 15 µm darstellt.

9. Kunststoffolienverbunde nach Anspruch 1, dadurch gekennzeichnet, dass die Schicht c) eine Dicke von 25 bis 150 µm aufweist.

10. Verwendung der Kunststoffolienverbunde nach Anspruch 1 zur Herstellung von Verpackungen, Siegelnahtbeuteln, Schlauchbeuteln, Beutel- oder Standbeutelverpackungen, Sachets, Einwickler, Säcken, Flossenpackungen oder Taschen.

11. Verwendung der Verpackungen nach Anspruch 10 als Verpackungen, Siegelnahtbeuteln, Schlauchbeuteln, Beutel- oder Standbeutelverpackungen, Sachets, Einwickler, Säcke oder Taschen für Nahrungsmittel, die in der Verpackung einem Konservierungsverfahren unterzogen werden.

12. Kunststoffolienverbunde gemäss Anspruch 1, dadurch gekennzeichnet, dass die Sauerstoffbarrierewirkung, gemessen in [cm³/(m² x day x bar)], kleiner als 1,8, zweckmässig kleiner als 0,6 und bevorzugt kleiner als 0,3, gemessen bei 25°C und 50% rel. Feuchte, ist, und/oder die Wasserdampfbarrierewirkung in [g/(m² x day)] kleiner als 0,6, zweckmässig kleiner als 0,4, bevorzugt kleiner als 0,1, gemessen bei 25°C und 90% rel. Feuchte, ist.

13. Kunststoffolienverbunde gemäss Anspruch 1, dadurch gekennzeichnet, dass die Sauerstoffbarrierewirkung in [cm³/(m² x day x bar)], gemessen bei 25°C und 50% rel. Feuchte, nach den Sterilisationsbedingungen, kleiner als 2,0 und insbesondere unter 0,8, und/oder die Wasserdampfbarrierewirkung in [g/(m2, x day)], gemessen bei 25°C und 90% rel. Feuchte, nach den Sterilisationsbedingungen, von unter 1,0 und insbesondere kleiner als 0,9 ist.
